(19) Europäisches Patentamt / European Patent Office / Office européen des brevets

(11) **EP 1 397 245 B1**

(12) **EUROPEAN PATENT SPECIFICATION**

(45) Date of publication and mention
of the grant of the patent:
**30.04.2014 Bulletin 2014/18**

(21) Application number: **02724006.8**

(22) Date of filing: **01.05.2002**

(51) Int Cl.:
***B32B 9/04*** *(2006.01)*      ***C08G 18/61*** *(2006.01)*
***C09J 7/02*** *(2006.01)*

(86) International application number:
**PCT/US2002/013660**

(87) International publication number:
**WO 2002/088209 (07.11.2002 Gazette 2002/45)**

(54) **WATER-REDUCIBLE URETHANE OLIGOMERS**

WASSERVERDÜNNBARE URETHANOLIGOMERE

OLIGOMERES D'URETHANE REDUCTIBLES DANS L'EAU

(84) Designated Contracting States:
**AT BE CH CY DE DK ES FI FR GB GR IE IT LI LU
MC NL PT SE TR**

(30) Priority: **02.05.2001 US 848388
29.05.2001 US 870001**

(43) Date of publication of application:
**17.03.2004 Bulletin 2004/12**

(73) Proprietor: **Shores, Andrew A.
Venice, CA 90291 (US)**

(72) Inventor: **Shores, Andrew A.
Venice, CA 90291 (US)**

(74) Representative: **Kierdorf Ritschel
Sattlerweg 14
51429 Bergisch Gladbach (DE)**

(56) References cited:
**EP-A- 0 380 236      WO-A-00/52080
GB-A- 1 128 642      US-A- 5 543 171
US-A- 5 543 171      US-A- 6 166 093**

## Description

## BACKGROUND OF THE INVENTION

Field of the Invention

This invention discloses water-reducible urethane oligomers prepared from polyisocyanates and silicones having one or more isocyanate-reactive groups and ionizable groups. Emphasis is being placed on the use of the oligomers as release coating in adhesive-coated products as well as a process for creating adhesive tapes and labels.

Description of the Prior Art

A pressure-sensitive adhesive tape is generally manufactured and sold with the tape wound upon itself in convolutions to form a roll of some suitable length of tape. Consequently, when it is necessary to use the tape, it must be possible to unwind the desired length from the roll without excessive force or delaminating of the backing, offsetting of the adhesive, or the like, regardless of the time or conditions under which the tape has remained in roll form prior to use. For these reasons, a coating known as a release coat or backsize is generally provided on the backside of the tape backing member, i.e., the side opposite that on which the adhesive mass is applied. Such a coat, compared to an uncoated backing member, as is its objective, offers relatively low adhesion to the adhesive mass.

EPA 0 380 236 A2 of Leir discloses a diamine-terminated silicone, the preparation of ionically-modified silicone-polyurea from ingredients having "a high degree of difunctionality with little contamination from monofunctional...impurities.." which "inhibit the chain extension reaction and limit the attainment of optimum molecular weight, and thereby optimum tensile strength of the polyurea", and its use as an elastomer, a pressure sensitive adhesive and a low adhesion backsize. U.S. Pat. 4,287,109 of Schlak et al. disclose an aqueous resin of a Silicone-Si-O-C-Polyester block copolymer. B.P. 1,128,642 of Keberle et al. and G.P. DE 37 30 780 A1 of Nagorski et al. disclose water base silicone-modified polyurethanes. Keberle suggests their use for impregnating and coating fabrics, leather, paper, glass, wood, laminates and foamed plastics for anti static finishes and hydrophobic coatings, and as binder, lubricant, mold release agent, cleaning agent, leveling agent and corrosion inhibitor. Nagorski suggests usage as coating for wood, metal, paper, synthetic fabric, flock and leather. EPA 0 342 826 of Higgins and its corresponding USP 5,082,704 disclose a silicone-modified polyurethane dispersion in water which may be used to fabricate a release liner for adhesives, most notably for asphalt roofing materials. My own inventions, U.S. patent 5,356,706 and 5,543,171, disclose processes for manufacturing aqueous release coatings for pressure sensitive adhesive tapes by reacting a silicone oligomer having 2-3 isocyanate-reactive groups and a diol having an acidic group with an excess polyisocyanate, and further reacting, in water, with a tertiary amine to form a salt and a primary or secondary polyamine to extend the prepolymer into a polymeric chain. USP 5,679,754 of Larson et al. disclose fluorinated polyurethanes with sulfonate groups as release agent dispersion in water. USP 5,750,630 and 6,072,019 of Sengupta disclose a "polyurethane polymer whose chain includes silicone-containing segments and whose polymer chain is end-capped with a single isocyanate-reactive silane group" and a 2.5-30 weight percent solution in water of the polyurethane,

The Encyclopedia of Polymer Science and Engineering (Ed. Herman F. Mark, Wiley Interscience, Vol. 10, P.432) reports the definition of an oligomer by the International Union of Pure and Applied Chemistry (IUPAC) as "a substance composed of molecules containing a few of one or more species of atoms (constitutional units) repetitively linked to each other." A polymer, on the other hand, is characterized by the repetition of a great number constitutional units, or monomers. The average number of monomers per molecule, also referred to as average degree of polymerization (DP), is about 3-50 for an oligomer and about 50-1,000 for polymers. The "number-average molecular weights ($M_n$) of commercial polymers usually lie in the range of 10,000-100,000" (Textbook of Polymer Science, Third Edition, Fred W. Billmeyer, Jr., Ed., p.17) with weight-average molecular weights ($M_w$) being 2.5-5 times higher.

Condensation polymers, such as polyurerthanes, are synthesized by stepwise polymerization. In order to obtain good physical properties, such as tensile strength, elasticity and cohesive strength, which prevents transfer to the pressure sensitive adhesive in tape and label applications thus detackifying the adhesive, they are prepared from polyfunctional reactants in close stoichiometric proportions to build long polymeric chains containing monomeric units in excess of 50 and $M_w$ in the 20,000-120,000 ranges. The use of monofunctional monomers is avoided since they yield low molecular weight products, which generally result in poor physical properties. Thus, in the preparation of prior art polyurethanes all the monomers are polyfunctional and they are present in stoichiometric proportions to obtain high DP and $M_w$. Sengupta's polyurethane also includes a minor stoichiometric amount, 3-6%, of a monofunctional silane but in his invention "polymers having weight average molecular weight in the range of from about 20,000 to about 120,000 are found to be suitable" (USP6072019, p.4, 1.3-6). Their concentrations in solution or dispersion were 26-37%, about the same as those of my previous inventions listed above. Higher polymer concentrations yield too high, impractical, solution viscosities, above 20,000 cps at ambient.

## SUMMARY OF THE INVENTION

The present invention relates to water soluble urethane oligomers formed by reaction of a composition comprising in admixture:

A. polyisocyanate, and the isocyanate reactive group containing monomers B. silicone, C. optionally reactant, and D. optionally organic substance with no silicon and no ionizable group, and wherein either silicone B or reactant C, or both, have at least one ionizable group, and E. compound providing counterion for said ionizable group, wherein either the weight average molecular weight of said oligomer is 500-10,000 or its viscosity is less than 20,000 cps at 20°C when dissolved in a 1/1 acetone/water mixture at 40% solids or more, or at 50% solids or more, wherein

- one or more of said silicone B, reactant C and substance D have a single isocyanate-reactive group, or
- silicone B, reactant C and substance D all have two or more isocyanate-reactive groups and the imbalance of the number of the isocyanate groups and the isocyanate-reactive groups in said admixture is more than 6% in favor of the isocyanate groups.

The imbalance of the isocyanate groups over the isocyanate-reactive groups is greater than 6% and in most cases greater than 10% in favor of the isocyanate groups.

The product of this invention can be prepared in melt without solvent. However, it is most practically prepared in a dry, water-soluble solvent, such as acetone, N-methyl pyrrolidone, dimethylformamide, and alike. The total solids concentration of the reaction product dissolved in a solvent, such as a 1/1 acetone/water mixture, by weight, can be as high as 40%, even 50-65%, without excessive viscosity build-up that is difficult to handle, such as 20,000cps at ambient temperature (20°C). A Brookfield RVT viscometer may be used to measure viscosity. Prior art polyurethane compositions reached this viscosity at less than 40% solids, most at 35% or less.

This invention further discloses a process for manufacturing a pressure sensitive adhesive-coated product comprising the steps of:

i. providing a mixture of water soluble urethane oligomers having a weight average molecular weight of 500-10,000 formed by reaction of a composition comprising in admixture optionally dissolved in an organic solvent:

A. polyisocyanate, B. silicone, C. optionally reactant, and wherein either silicone B or reactant C, or both, have at least one ionizable group, D. optionally organic substance with no silicon and no ionizable group, and E. compound providing counterion for said ionizable group, and wherein either

a) silicone B, reactant C and substance D have each two or more isocyanate-reactive groups and the imbalance of the number of the isocyanate groups and the isocyanate-reactive groups in said admixture is more than 6% in favor of the isocyanate groups, or
b) wherein one or more of said silicone B, reactant C and substance D have single isocyanate-reactive groups, and

ii. mixing said oligomer with water to form dilute solution,
iii. coating a flexible substrate with said solution and removing water by heat, and
iv. coating said substrate with a pressure sensitive adhesive.

The order of some of the steps may be reversed. For example, ionization with the counterion may be accomplished by reacting the ionizable group with the counterion prior to the reaction with the polyisocyanate. Furthermore, if a solvent solution of the adduct is desired the said ionizable group and the mixing with a counterion are optional, the mixing in step ii is with a solvent, which is removed in step iii.

The silicone portion of the oligomers contribute release from pressure sensitive adhesive, water repellency, oil repellency, and low friction. The polar groups provide good adhesion, without need for a primer, between the oligomeric coating and various substrate materials. The divalent polar groups, e.g. carbamate, urea, thiocarbamate, as well as aromatic and ionic groups increase the glass transition temperature and render the compound solid, cohesive and high temperature melting.

This invention provides a reaction product with average DP of about 3-50, preferably about 4-20, and most preferably about 4-10. The $M_w$ is from 500-10,000 and most preferably 600-6000. It was surprising to discover that in spite of the low DP and $M_w$, the oligomers provide consistent release, even with aggressively tacky adhesives. It is recognized that the said reaction product comprises a mixture of oligomeric species comprising various combinations and permutations of monomers, such as ABC, ABCD, AB, ABD, AC, AD and ACD.

The oligomeric mixture of urethane of this invention has a number of advantages over the prior art polyurethanes:

- It provides easier release than the prior art release agents at the same silicone concentration in the molecule
- The concentration of the expensive silicone moiety can be reduced by a factor of 2-10, and more in some cases, while maintaining the same release properties
- The adduct can be prepared and applied to tape backings either from solvent or water
- It can be manufactured in one reactor, instead of two, as my said previous polymeric release agents
- It needs not contain expensive silanes, as Sengupta's polyurethane does
- It can be manufactured and shipped at about twice the active ingredient concentration level than that of prior art release agents resulting in lower manufacturing cost per unit weight of neat release agent, lower shipping cost, lower storage cost and lower drum disposal cost.

A dilute aqueous, or solvent solution, or dispersion, of the oligomers can be coated onto various substrates and dried with heat to form a thin film with good adhesion to the substrates. In spite of the low DP and $M_w$, they provide good release, even to aggressively tacky adhesives.

## DETAILED DESCRIPTION OF THE INVENTION AND PREFERRED EMBODIMENTS

The silicone segment in the oligomer of this invention is introduced into the molecule by a compound having a number of dimethylsiloxane segment units, and/or 1-2 trimethylsiloxane end-groups, and one or more isocyanate-reactive groups. Preferably, the isocyanate-reactive groups in the silicone are bonded through intermediate Si-C linkage to polyalkylene, polyalkyleneoxy or polyester groups. Preferred alkyleneoxy units are ethyleneoxy and propyleneoxy. Unlike the Si-O-C linkage, the Si-C bond provides hydrolytic stability. The silicone may also have one or more ionizable group preferably linked through a Si-C bond. The dimethylsiloxane segment may be part of the main chain, or side chain. The number of dimethylsiloxane units per reactant molecule is 1-25 in most cases, but may be 50, or more. Preferred silicone-containing compound of this invention are hydroxyl, thiol, amino and carboxyl functional. The isocyanate-reactive groups may be placed either at the end of the molecule, or side chain. An example of a series of such reactants have alkylene, alkyleneoxy, and their combination, such as $-(CH_2)_3-O-(CHRCH_2O)_nH$ termination with R=H or $CH_3$ and n=0-50, preferably 5-20.

Examples of compound B with ionic or potential anionic groups are: 2,2'-dimethylol propionic acid, tartaric acid, lysine, N-2-aminoethyl-2-aminopropionic acid, N-2-aminoethyl-2-aminoethane sulfonic acid, the propoxylated adduct of 2-butene-1,4-diol with sodium bisulfite, N-2-aminoethyl-2-aminoethane phosphonic acid. Other examples are reaction products of cyclic anhydrides with a multifunctional compounds having one or more group capable of reacting with the anhydride and one or more group capable of reacting isocyanate. The multifunctional compound may be a polyamine, polyol, aminoalcohol, aminoacid and hydroxyacid. Examples of anhydrides are phthalic anhydride, hydrogenated phthalic anhydride, methyltetrahydro phthalic anhydride and succinic anhydride. The reaction takes place at mild conditions, usually under 100°C, and the product may be an amide or ester having a carboxyl group and one or more groups capable of reacting with the isocyanate. Part of the carboxyl groups may also react with isocyanate. Preferred multifunctional compounds reacting with anhydride are aminoalcohols, such as diethanolamine, 2-ethanolamine, N-methyl-2-ethanolamine, propylene glycol, 2-amino-2-ethyl-1,3-propanediol, 4-amino benzoic acid, N-methylpropylenediamine, glycerol, and alike.

Examples of suitable cationic groups in compounds also having isocyanate-reactive groups are $-NHR_2^+X^-$ or $-NR_3^+X^-$ wherein X may be a soluble anion, such as halide, hydroxide or carboxylate and R may be alkyl, cycloaliphatic alkyl or aryl group with 1-6, preferably 1-4 carbon atoms. Examples of compounds providing the positively charged part of the formula are tertiary amines and polyamines having primary amine groups and secondary amine group, such as diethylene triamine. Counterions for acids are bases, such as ammonia, potassium hydroxide, triethylamine, N,N'-dimethylpropylamine, N-methyl-di-(2-ethanol)amine, N-methylmorpholine, ethanolamine and ethylene diamine. Volatile amines, such as lower alkyl amines, aminoalcohols and ammonium hydroxide are preferred. Examples of compound providing negatively charged counterions to the amine group are ethyl bromide, 2-chloroacetamide, acetic acid and dimethyl sulfate, which form with said amines tertiary or quaternary ammonium salts.

Nonionic hydrophilic groups, such as hydroxyl, polyoxyethylene and oxypropylene segments are often part of the adduct composition. They may be bonded to the silicone or introduced into the urethane oligomers of this invention by the reaction of a molecule having polyethylene glycol or polypropylene glycol segments with the isocyanate. However, their concentration should be limited since they tend to increase the water sensitivity of the urethanes.

Any of the polyisocyanates heretofore used for the formation of polyurethanes are suitable for the purposes of the present invention although diisocyanates and triisocyanates are preferred. Those diisocyanates, which can be used in the practice of the invention, in general, include aromatic, aliphatic and cycloaliphatic diisocyanates. In addition, mixtures of two or more species, kinds and types of the isocyanate functional component can be employed.

Examples of polyisocyanates that can be employed in the instant invention include toluene-2,4-diisocyanate, a mixture of toluene-2,4- and toluene-2,6-diisocyanate, metaphenylenediisocyanate, methylene bis-2,4- and 2,6-phenylisocyanate (MDI), hydrogenated MDI, isophorone diisocyanate, tetramethyl-m-xylylene diisocyanate and polymeric MDI's, which are mixtures of di- and triisocyanates based on MDI. Isocyanate terminated prepolymers can also be used as well as mixtures of isocyanates with average fractional values of isocyanate functionality. In the broad context of the present invention, it will be appreciated that polyisocyanates also include those compositions that provide requisite isocyanate functionality within the polyisocyanate composition to react with both components B and C as herein described. The proportion of polyisocyanate, providing hard segments for the oligomers, is generally in the range of 15-60%, and most are in the range of 30-45%.

Prior arts reported that higher silicone content, without upper limit, in the urethane polymer results in better release. Thus, high silicone-content polyurethanes were commercialized, at great expense, to satisfy many demands. In contrast, the oligomer of this invention attains excellent release values at lower silicone levels, most at 1-10%. The methylsiloxane content, e.g. the sum of mono-,di- and trimethylsiloxanes in the oligomers for most applications of this invention is 0.5-10%. It is recognized that di- and trimethylsiloxanes are the most effective ones. Other characteristics attributed to silicones, such as slip, and hydrophobicity is in the same line.

The amount of reactant having isocyanate-reactive groups and acid or amine group is also important since it provides dispersibility and solubility through their potential ionic groups. Useful amounts of carboxyl content in the copolymer were found to be in the range 20-300 mEq./100g of urethane. Lower amounts are not enough to disperse or solubilize the urethane oligomer in water while higher ones render the coating water sensitive. The preferred range is 60-200 and the most preferred range is 80-120 mEq./100g. The ionic strength of sulfonic acid and phosphonic acid groups is much higher than that of the carboxylic acid group. Consequently, considerably lower amount of these anionic groups are required to solubilize the urethane in water. The amount of the cationic compound depends on the number carbon atoms in the molecule and the amount of nonionic hydrophilic groups but their proportion should be sufficient to disperse or solubilize the adduct in water.

The reaction of the polyisocyanate with the isocyanate-reactive groups is carried out preferably in two stages. At the first stage an NCO-terminated compound is formed, which is then capped with an isocyanate-reactive compound. The average degree of polymerization, DP and weight average molecular weight, $M_w$ can be regulated by the initial stoichiometry of the reacting monomers. In general, the higher the NCO/OH the lower is the DP and $M_w$. At the capping stage, the larger the stoichiometric excess of the monomer with two or more isocyanate-reactive groups, the lower is the DP and $M_w$ of the resulting urethane. Carother's equations, reported in Principles of Polymerization, third Edition, by Georges Odian, Ed., p. 110-111, quantify these relationships. For nonstoichiometric mixtures the formulas are:

$$DP = 2/(2 - f_{avg}), \qquad\qquad M_w = SUM(w_i M_i(DP)),$$

and

$f_{avg} = 2$(Total Number of Functional Groups that Are Not in Excess)/$SUM(N_i)$ wherein $f_{avg}$ is the average functionality of the monomers, $N_i$ is the number of molecules of monomers i with functionality $f_i$, $w_i$ is the weight fraction of the monomer i and $M_i$ is molecular weight of the monomer i.

It is thus appreciated that the DP and $M_w$ depend on the functionality, molecular weight and weight proportion of the monomers and they can be readily adjusted by the use of the above equations to yield the product of this invention. One of ordinary skilled in the art will recognize that other equivalent parameters may also apply.

As the reactions with isocyanates are exothermic, it may be only necessary to mix the various components together and allow the temperature to rise to the exotherm temperature and further adjusting the temperature with or without external heating or cooling. The reaction is conducted under anhydrous conditions for such a time at the selected temperature that is practical to provide the desired results.

The quantity of organic polyisocyanates used to prepare the prepolymer is dependent upon the quantity of active hydrogen groups in the monomer and oligomer, the particular isocyanate compound used, the molecular weight of the isocyanate, the isocyanate (NCO)/isocyanate-reactive group ratio, etc. All of these factors, while influencing the amount of polyisocyanate to be used are easily taken into account by one skilled in the art to determine the precise amount of NCO groups required in any particular formulation. The initial stoichiometric ratio of NCO to the sum of isocyanate-reactive groups in the practice of this invention is generally between about 1.2 and 4, preferably 1.4-2.5 and most preferably 1.5-2. Lower ratios may increase the viscosity, which may be difficult to handle, and increases the solvent demand, while higher ones may decrease the compound's solubility and create excessive foaming if it is further reacted in the presence of water.

If desired, catalysts that are normally used to accelerate the NCO reaction can be employed in the instant invention. The use of a catalyst is particularly useful to accelerate the reaction of aliphatic isocyanates, secondary OH/ortho-NCO, SH/NCO and COOH/NCO reactions. Catalysts include tertiary amines such as triethylamine, tributylamine, N-methylmorpholine, and organometallic compounds such stannous octoate, dibutyl tin dilaurate, zinc octoate.

The NCO terminated prepolymer thus prepared is then capped with an excess of said silicone B, reactant C or substance D. Examples of substance D are amines, alcohols, aminoalcohols, ammonia and carboxylic acids, such as methanol, propyleneglycol, methoxypropanol, dipropyleneglycolmonomethyl ether, water, morpholine, propylenediamine, adipic acid, hydroxyacetic acid, and lysine. Large stoichiometric excess may be applied when multifunctional compounds are used. The isocyanate-terminated compound may also be reacted in aqueous medium with either water itself or a primary or secondary amine followed by reaction of the acid functionality with an amine. The order may be reversed or may be run concurrently by using a tertiary amine as counterion for the acid.

The preparation of the oligomers at high solids makes easier to prepare a neat (100% active) product in powder form by solvent evaporation, such as spray drying or oven drying. The neat product is less costly to transport from the manufacturing plant to the tape processing facility.where it is redissolved in a solvent, or preferably dissolved or dispersed in water with added base, if necessary. Residual solvent, such as acetone, may also be evaporated by fractional or vacuum distillation and replaced with water to yield an emulsion or solution.

The water solution, or dispersion, of the urethane oligomers can be diluted further with water to provide a desired coating concentration, for example 0.25 to 5%, or more, which can be cast on a substrate, and the water evaporated, thereby casting a thin film of the urethane on the substrate.

Optionally, the oligomer of this invention may be crosslinked following coating. This is normally not necessary. It may sometime be desirable, if increased heat stability and higher resistance to humidity and solvents are desirable for some particular application.

The oligomer of this invention can be used alone or mixed with various polymeric film formers. Such compositions are of particular advantage, as satisfactory release and other functional properties in some instances can be provided much more economically, for example, when the substrate coated is relatively porous as is the case of a paper backing member in the manufacture of pressure-sensitive adhesive tape. The release agent is present in the release composition in only minor amounts, usually 1 to less than 10%. Thus, as the siloxane release agent is the most expensive component of the release compositions, its use therein results in considerable savings. Examples of film formers in emulsion form are polyvinyl acetate, ethylene vinylacetate copolymers, polyamides, polyacrylics, polyurethanes, epoxy resins, polyvinyl chloride homo and copolymers, and their mixtures. It is theorized that the composition of this invention migrates to the outer surface of a coating, thus providing the desirable surface characteristics.

The oligomers of this invention can be applied to various substrates, such as plastic film, glass fabric; metal foil, paper and latex impregnated paper by various means. Plastic films are usually coated with a #3-20 Meyer rod, #130-250 rotogravure roll or a series of rotating smooth rolls. Where the substrate is porous, e.g., papers and textile fabrics, the coating can be applied by such operations as immersion, spraying, brushing, slot and roll coating. Heat, moving air, or their combination may be applied to volatilize water and any solvent, if present, thereby leaving a deposit or coating of the release agent or composition on the substrate.

Adhesive-coated products include tapes, labels, protective film or paper, printing ink with antiblock, slip, and release properties, and write-on office products such as repositionable note pads. Other applications are, water repellent coating for masonry, concrete, stone, textile, and metal finishing. Further applications include coating for fibrous containers, rubber, plastic, for the adhesive under linoleum and tile surface and mold release agent.

The pressure-sensitive adhesive composition may comprise in admixture elastomers, a tackifying resins and additives. The elastomer may be styrene-isoprene or styrene-butadiene block or random copolymers, natural rubber or ethylene-vinylacetate rubber. Other generic adhesives may also be used, such as polyacrylates, polyurethanes and vinyl ether polymers. The adhesive is applied to the backing member in the form of a solvent solution, aqueous emulsion or hot-melt by methods of calendering, extrusion, kiss roll coating, etc. The solvent or water is removed from the adhesive composition by evaporation by heating. The adhesive product is then generally wound on itself for storage and for slitting into rolls or sheeted out into suitable width and length. The coverage of pressure-sensitive adhesive composition (on a dry basis) is preferred to be in the range of between about 10-100 g/sqm but may be outside this range if required for specific purposes.

The invention will now be further illustrated and described by reference to the following specific non-limiting Examples. The quantities and proportions are expressed in this Application in grams and percent by weight, unless specifically stated otherwise. The following abbreviations are used:

MEOA: N-methyl-ethanolamine, MEK: methylethyl ketone, MPK: methyl-n-propyl ketone, TEG: triethylene glycol, NMP: N-methyl-2-pyrrolidone, PGL: propylene glycol,

PAN: phthalic anhydride, DEOA: diethanolamine, PMA: propyleneglycolmethylether acetate, TEEG: tetraethylene glycol,

TDI: 80/20 mixture of 2,4- and 2,6-toluenediisocyanate, PGL: propylene glycol, DMEA: N,N'-dimethyl ethanolamine, TS: total solids, VIS: viscosity, ST: softening temperature, SO: Proportion of siloxane in silicone.

SIL1: monocarbinol-terminated silicone with OH equivalent of 600 $(CH_3)_3SiO((CH_3)SiO)(CH_3)_3Si)(CH_2)_3O(CH_2CH_2O)_{7.6}H$

SIL2: linear dimethylsiloxane oligomer having di-omega groups of $-(CH_2)_3O(CH_2CH_2O)_{15}H$ and OH equivalent of 1150

PODA: polyoxypropylene diamine, amine equivalent 115 and formula $H_2NCHCH_3CH_2(OCH_2CHCH_3)_nNH_2$.

EXAMPLE 1

This Example illustrates the preparation and evaluation of the product of this invention from the three essential monomers A, B, and C, wherein the silicone B has only one isocyanate-reactive group.

DEOA, 16.7 (318 mE-OH) was dissolved in a mixture of acetone, 46.7 and NMP, 20, and PAN, 23.1 (156 mM) was sifted in gradually while stirring and cooling externally with ice-water while the internal temperature was maintained below 55°C (Solution A). Infrared spectrum of the reaction-product confirmed that the reaction product was an amide having carboxyl and hydroxyl groups.

TDI, 30.2 (346 mE-NCO) were charged into a reactor and portion of the above-prepared solution, 59.3 (177 mE-OH), was added slowly while stirring and cooling to maintain 50-55°C during the reaction. To this solution was than mixed SIL1, 30.0 (50 mE-OH) and the mixture was left to react at 50°C for four hours to let all the OH groups be consumed. The isocyanate-terminated compound was then capped with the remainder of the Solution A and let react at 50°C overnight to yield a clear solution. The carboxyl function was than neutralized with DMEA, 9.2 and further diluted with water, 6.9 and methanol, 13.9, to yield a clear solution having TS=62% and VIS=5900 cps. The solid isolated from the solution had ST=110-116°C, SO=9.9%.

EXAMPLE 2

This Example illustrates the preparation and evaluation of the product of this invention wherein the ion-providing C monomer has only one isocyanate-reactive group and there are two kinds of optional D monomer included: one with one isocyanate-reactive group and another with two isocyanate-reactive groups.

MEOA, 6.8 (92 mM, 93 mE-OH) was dissolved in a mixture of NMP, 54.3 and PMA, 27.2, and PAN, 13.2 (89 mM and 89 mE-COOH) was sifted in gradually while stirring and cooling externally with ice-water while the internal temperature was 50-55°C. Infrared spectrum of the reaction-product confirmed that the reaction product was an amide having carboxyl and hydroxyl groups.

TDI, 39 (447 mE-NCO) were charged into a reactor and the above-prepared solution, mixed with TEG, 10.3 (137mE-OH) was added slowly while stirring and cooling to maintain 50-55°C during the reaction. This was followed by stirring in SIL2, 20.1 (19 mE-OH). The mixture was left to react at 60°C for one hour to let all the OH groups consume. The isocyanate-terminated intermediate was then further reacted at 30-60°C with PODA, 8 (70mE-NH) followed by capping and methanol, 3.1 (97mE-OH) with an additional 1.0g excess methanol stirred in, and reacted for 2 hours at 55°C. It was then cooled to ambient and mixed with DMEA, 7.9 (89mM) to yield a clear solution with TS=55%, VIS=5900cps and ST=86-88°C, SO=8.0%.

EXAMPLE 3

This Example illustrates the preparation and evaluation of the product of this invention wherein both the silicone monomer B and the ion-providing C monomer have each one isocyanate-reactive group.

MEOA, 9.0 (120 mE-OH) was dissolved in NMP, 81.8 and PAN, 17.7 (117 mM and 117 mE-COOH) was sifted in gradually while stirring and cooling externally with ice-water while the internal temperature was 50-55°C. The solution was then mixed with TEG, 6.0 (80 mE-OH) and gradually added to TDI, 34.5 (396 mE-NCO) and reacted while maintaining 55-60C. The NCO-functional intermediate was then reacted with SIL1, 20 (35 mE-OH), as in Example 1 and further reacted with PODA, 15.4 (134 mE-NH) as in Example 2. It was then was cooled to ambient and mixed with DMEA, 8.2 (92 mM) to yield a clear solution with TS=55%, VIS=5300cps and ST=84-87°C, MS=6.6%.

EXAMPLE 4

This Example illustrates the preparation and evaluation of the product of this invention wherein SO was reduced to 6.0% of the solids.

MEOA, 6.8 (91 mM, 91 mE-OH) was dissolved in a mixture of NMP, 53.8 and PMA, 26.9, and PAN, 13.2 (89 mM) was sifted in gradually while stirring and cooling externally with ice-water while the internal temperature was 50-55°C.

The solution was then mixed with TEG, 12.0 (160 mE-OH) and reacted with TDI, 41.5 (476 mE-NCO) as in Example 3. The NCO-functional intermediate was then reacted with SIL2, 15 (14 mE-OH), further reacted with PODA, 8.0 (70 mE-NH), capped with methanol, 2.5 (108 mE-OH) and an additional 1.0 g methanol was mixed into the solution, all as in Example 3. It was then cooled to ambient and mixed with DMEA, 5.9 (66 mM) to yield a clear solution with TS=55%, VIS=7300cps and ST=88-89°C.

EXAMPLE 5

This Example illustrates the preparation and evaluation of the product of this invention wherein SO was reduced to 4.4% of the solids.

MEOA, 8.0 (107 mE-OH) was dissolved in a mixture ofNMP, 48.6 and PMA, 32.2, and PAN, 15.6 (106 mM) was sifted in gradually while stirring and cooling externally with ice-water while the internal temperature was 50-55°C. The solution was then mixed with TEG, 11.8 (157 mE-OH) and reacted with TDI, 42.0 (482 mE-NCO) as in Example 3. The NCO-functional intermediate was then reacted with SIL2, 11 (10 mE-OH), further reacted with PODA, 8.3 (73 mE-NH), capped with methanol, 3.3 (103 mE-OH) and an additional 1.0 g methanol was mixed into the solution, all as in Example 3. The solution was cooled to ambient and mixed with DMEA, 7.1 (78 mM) to yield a clear solution with TS=55%, VIS=8300cps and ST=86-92°C.

EXAMPLE 6-7

This Example illustrates the evaluation, as release agents in adhesive tapes, of the products prepared in the previous Examples and compares them to the prior art release agents.

A biaxially oriented polypropylene (BOPP) film, 30 micron thick, was corona treated on both sides to yield surfaces of 42dynes/cm surface tension. It was then coated on one side with 3% aqueous solutions of the urethanes of the Examples (Ex.) 1-5 using a #6 Meyer rod and dried in an oven at 65° C for 10 minutes. The release-coated films were than laminated with commercially available pressure sensitive adhesive tapes and submitted to accelerated aging at 72° C for 16 hours. The tapes were then peeled from the films at a T-peel mode at a speed of 25 cm/min and the force required to peel was measured. The peeled tapes were then laminated to a finely polished flat stainless steel plate, peeled at an 180° angle and the peel force measured. For comparison, test specimen were made up similarly by laminating the tapes to uncoated BOPP, designated as No RA, and to BOPP coated with the commercial release agent composition of USP 5,356,706 (Shores) having 40% silicone and 15% SO. The following adhesive tapes were laminated to the release-coated BOPP:

-  Packaging Tape: "Super Strength Packaging Tape" manufactured by 3M Company, 2" wide, believed to have a 50 micron thick BOPP backing and a hot melt adhesive based on a styrene-isoprene-styrene block copolymer mixed with a high melting temperature terpene resin.
-  Masking Tape: Anchor tape #504, 1" wide, believed to have an adhesive based on natural rubber and SBR.

The average degree of polymerization (DP) and weight average molecular weights ($M_w$) were calculated from the stoichiometry of the reactants using Carother's equations and confirmed by Size exclusion Chromatography analysis.

T-peel values from the release agents (RA) and adhesion to steel (ASS) are reported in gram force units in Table I. The analysis of the results show that the release agents of this invention are in general better than the polymeric release agent disclosed by the prior art.

TABLE I

| EX. | %SIL1 | %SIL2 | DP | $M_w$ | % TS | Packaging Tape | | Masking Tape | |
|---|---|---|---|---|---|---|---|---|---|
| | | | | | | T-Peel | ASS | T-Peel | ASS |
| 1 | 20 | - | 15 | 5100 | 62 | 450 | 3.1 | 320 | 1.5 |
| 2 | - | 20 | 4 | 2400 | 55 | 210 | 2.9 | 180 | 1.3 |
| 3 | 19 | - | 6 | 1600 | 55 | 330 | 3.0 | 320 | 1.4 |
| 4 | - | 15 | 4 | 1900 | 55 | 230 | 3.0 | 200 | 1.5 |
| 5 | - | 11 | | 4 1600 | 55 | 260 | 3.1 | 220 | 1.5 |
| Sengupta | - | | 50+ | 20000-2000000 | 26-37 | - | - | - | - |
| Shores | - | 40 | | | 29 | 610 | 3.0 | 280 | 1.3 |
| 6 | No RA | | | - | - | - | 1600 Adhesive Delamination | | 1100 Adh.Del. |

8

EXAMPLE 8

This Example illustrates the preparation and evaluation of the oligomers of this invention by using a monofunctional D substance to cap the isocyanate of the prepolymer.

DEOA, 13.1 (125 mM, 250 mE-OH) was dissolved in a mixture of MPK, 27 and NMP, 27, and PAN, 18.1 (122 mM and 122 mE-COOH) was sifted in gradually while stirring and cooling externally with ice-water while the internal temperature was 50-55°C. Infrared spectrum of the reaction-product confirmed that it was an amide having carboxyl and hydroxyl groups.

TDI, 41.6 (478 mE-NCO) were charged into a reactor and the above-prepared solution was added slowly while stirring and cooling to maintain 40-47°C during the reaction. This was followed by stirring in 2 drops of the antifoam D.C. 163 and SIL, 21.3 (19 mE-OH) and left to react at 65°C for one hour to let all the OH groups consume. The isocyanate-terminated prepolymer was then capped by mixing into the reaction mixture methanol, 7.0, which is 25% more than the stoichiometric amount (175mE-OH) for the purpose of accelerating and completing the capping reaction. The carboxyl functionality was than neutralized with DMEA, 8.1 to yield a clear, free flowing solution having TS=68.1%, VIS=39000 cps; and TS= 58%, VIS=1100cps, SO=8.4%.

EXAMPLE 9

This Example illustrates the preparation and evaluation of the oligomer of this invention by using a large stoichiometric excess of a difunctional monomer D to cap the isocyanate of the prepolymer.

DEOA, 60 (1572 mM, 1144 mE-OH) was dissolved in a mixture of MPK, 116.5 and NMP, 116.5, and PAN, 82.8 (559 mM) was sifted in gradually while stirring and cooling externally with ice-water to maintain the internal temperature of 50-55°C.

TDI, 82.3 (946 mE-NCO) were charged into a reactor and portion of the above-prepared solution, 127.4 was added slowly while stirring and cooling to maintain temperature slightly above ambient during the reaction. This was followed by adding slowly and stirring into 48.5 g of this solution TEEG, 4.5 (47mE-OH) and SIL, 9.5 (9 mE-OH) and left to react at 65°C for one hour to let all the OH groups consume. The isocyanate-terminated prepolymer was then capped by mixing into the reaction mixture PGL, 14.9 out of which only 2.2 (61 mE-OH) was the stoichiometric quantity and left to react overnight at 65°C. The carboxyl functionality was than neutralized with DMEA, 3.9 (44 mE) to yield a clear solution having TS=55.9% and VIS=8400 cps. The solid isolated from the solution had ST=90-92°C, SO=8.0%.

EXAMPLE 10

This Example illustrates the preparation and evaluation of the product of this invention wherein MS was reduced to 6.0% of the solids.

DEOA, 20.9 (199 mM, 399 mE-OH) was dissolved in a mixture of MPK, 44 and NMP, 44, and PAN, 29.0 (196 mM) was sifted in gradually while stirring and cooling externally with ice-water to maintain the internal temperature of 50-55°C.

TDI, 46.0 (528 mE-NCO) was charged into a reactor and portion of the above-prepared solution, 62.7 mixed with TEG, 10.0 (134mE-OH) was added slowly while stirring and cooling to maintain temperature slightly above ambient during the reaction. This was followed by stirring in SIL, 15.0 (13 mE-OH) and left to react at 65°C for one hour to let all the OH groups consume. The isocyanate-terminated prepolymer was then capped by mixing into the reaction mixture the stoichiometric quantity of methanol, 4.9 (153mE-OH) and an additional and an excess of methanol, 25.1 to accelerate and complete the capping reaction and to compensate solvent evaporation, and left to react overnight at 65°C. The carboxyl functionality was than neutralized with DMEA, 7.9 (89 mE) to yield a clear solution having TS=57.6% and VIS=820 cps. The solid isolated from the solution had ST=84-89°C.

EXAMPLE 11

This Example illustrates the preparation and evaluation of the product of this invention wherein SO was reduced to 4.0% of the solids.

DEOA, 6.3 (120 mE-OH) was dissolved in a mixture of MPK, 10 and NMP, 10 and PAN, 8.7 (159 mM) was sifted in gradually while stirring and cooling externally with ice-water while the internal temperature was 50-55°C.

TDI, 25.7 (295 mE-NCO) were charged into a reactor and the above-prepared solution mixed with TEG, 4.4 (60 me-OH) was added slowly while stirring and cooling to maintain temperature below 65°C during the reaction. This was followed by stirring in SIL, 5.3 (5 mE-OH) and left to react at 60°C for one hour to let all the OH groups consume. The isocyanate-terminated prepolymer was then capped by mixing into the reaction mixture methanol, 2.8 (88mE-OH) and an additional stoichiometric excess of methanol, 8 to accelerate the capping and to compensate solvent evaporation during the reactions. The carboxyl functionality was than neutralized with DMEA, 5.2 to yield a clear solution having TS=57% and VIS=3700 cps. The solid isolated from the solution had ST=86-89°C.

EXAMPLE 12

This Example illustrates the evaluation, as in Ex. 7, of the products prepared in Ex. 8-10 and compares them to the prior art release agents in Table II.

TABLE II

| EX. | % SI L2 | % TS | % VIS, cps | DP | Mw | Packaging Tape | | Masking Tape | |
|---|---|---|---|---|---|---|---|---|---|
| | | | | | | T-Peel | ASS | T-Peel | ASS |
| 8 | 21 | 58 | 1100 | 3.5 | 2300 | 325 | 2.9 | 250 | 1.4 |
| 9 | 20 | 56 | 8400 | 7.6 | 3500 | 325 | 3.0 | 250 | 1.4 |
| 9 | 15 | 58 | 820 | 4.3 | 2200 | 400 | 2.9 | 520 | 1.3 |
| 10 | 10 | 57 | 3700 | 4.4 | 1700 | 450 | 2.9 | 520 | 1.3 |
| Sengupta | | 26-37 | - | 50+ | 20000-120000 | - | - | - | - |
| Shores | 40 | 38 | 27000 | | | 610 | 3.0 | 280 | 1.3 |
| 6 | No RA | | - | - | - | 1600 Adhesive Delamination | | 1100 Adh.Del. | |

EXAMPLE 13

This Example illustrates the preparation and evaluation of the product of this invention wherein the silicone reactant B bears both isocyanate-reactive groups and an ionizable group.

TDI, 40.0 (449 mE-NCO) and NMP, 52 and a silicone composition, 30.0 (50 mE-OH and 100mE-COOH), derived from ethoxylated trisiloxane with OH equivalent of 600, COOH equivalent of 300 and molecular weight of 600 were charged into a reactor and allowed to react below 55°C. After the exotherm subsided TEG, 13.5 (180mE-OH) was added slowly while stirring and cooling to maintain 50-55°C during the reaction. The isocyanate-terminated intermediate was then further reacted at 30-60°C with PODA, 16.5 (143mE-NH). The solution was then mixed with DMEA, 6.5 (75mM) and water, 12, cooled to ambient to yield a clear solution with TS=58.7%, VIS=9500cps and SO=9.2%. Release characteristics were comparable to those of Ex. 1.

EXAMPLE 14-15

This Example shows that incorporating a small amount of release agent of this invention blended with a film former yields good unwind characteristics in adhesive tapes.

The release agent of Example 2 and 8 were blended with an emulsion of polyvinyl acetate in water each at the 10% (dry/dry) level, SO=0.8% of the total solids.

The formulation was coated onto a latex impregnated paper backing member in an amount to provide a dry weight of 14g/m$^2$. This was accomplished by heating the coated paper to remove water and fuse the backsize.

The backsize coated backing member was then coated with a hot melt adhesive formulated with a styrene-isoprene-styrene block copolymer, and tackified with rosin ester tackifiers, after which the mass coated sheet was slit to 25 mm wide rolls of tape. These were oven aged for 16 hours at 72° C and tested for unwind adhesion and adhesion to stainless steel. The results are indicated below:

Unwind Adhesion for Ex. 2 and 7: 240 and 270 g/25 mm
Adhesion to SS for Ex. 2 and 7: 920 and 980 g/25 mm.

EXAMPLE 16-17

This Example illustrates the good release characteristics obtainable with pressure sensitive adhesive-coated notepads by using the composition of this invention.

Clay coated craft paper having thickness of 10.9 kg/276 m$^2$ (24 lb/ream) was coated with a 2% TS solution in water of the urethane solution of Example 5 and 9 using a #6 Meyer rod and dried in a 72° C oven for 5 minutes. The coated paper was laminated with a 25 mm strip of a pressure sensitive adhesive-coated paper taken from a note pad manufactured by 3M Company under the Post-it brand name. A similar laminate was made with the same craft paper not coated with the urethane solution of this invention (Control).

The laminate was aged in an oven at 50° C for 2 weeks and tested for T-peel adhesion at a separation rate of 30 mm/min (12"/min). The force required to separate the laminates was 8 and 9 g/25mm for the release-coated paper of the Ex. 5 and 9 and 80g/25mm for the uncoated paper.

EXAMPLE 18

This Example illustrates the preparation and evaluation of the product of this invention wherein the silicone content was reduced to 2% and the SO to 1.0%.

MEOA, 12.4 (166mM, 166mE-OH) was dissolved in a mixture of NMP, 40 and PMA, 10, and PAN, 24.5 (166 mM and 166 mE-COOH) was added slowly while stirring and cooling to maintain 50-55oC during the reaction. This was followed by stirring in SIL2, 2.0 (1.7 mE-OH). The mixture was left to react at 60°C for three hours to let all the OH groups consume. The isocyanate-terminated intermediate was then further reacted at 65-70°C for 4 hours with a 100% excess of PG, 9.4 (123mE-OH). The solution was cooled to ambient and mixed with DMEA, 14.8 (166mM) to yield a clear solution with TS=52.5%, VIS=2225cps.

The solution was then evaluated as release agent with the 2" wide BOPP packaging tape, all as in Ex. 7, to yield the following results: T-Peel: 475g, ASS: 3.1kg. The release agent of this Example yielded better release characteristics than my earlier release agents disclosed in patents, even though it contains twenty times less of the same silicone.

**Claims**

1. Water soluble urethane oligomers formed by reaction of a composition comprising in admixture:

    A. polyisocyanate, and the isocyanate reactive group containing monomers
    B. silicone, C. optionally reactant, and D. optionally organic substance with no silicon and no ionizable group, and wherein either silicone B or reactant
    C, or both, have at least one ionizable group, and E. compound providing counterion for said ionizable group, wherein either the weight average molecular weight of said oligomer is 500-10,000 or its viscosity is less than 20,000 cps at 20°C when dissolved in a 1/1 acetone/water mixture at 40% solids or more, or at 50% solids or more, wherein

    - one or more of said silicone B, reactant C and substance D have a single isocyanate-reactive group, or
    - silicone B, reactant C and substance D all have two or more isocyanate-reactive groups and the imbalance of the number of the isocyanate groups and the isocyanate-reactive groups in said admixture is more than 6% in favor of the isocyanate groups.

2. Oligomers according to claim 1 whereby the weight average molecular weight is 600 to less than 6000.

3. Oligomers according to claim 1 wherein said isocyanate-reactive groups are selected from the group consisting of hydroxyl, primary amino, secondary amino, carboxyl and thiol, or mixtures thereof, or wherein the isocyanate-reactive groups are bonded through intermediate Si-C linkage to ethyleneoxy or propyleneoxy groups, or wherein said ionizable group is selected from the group consisting of carboxylic acid, sulfonic acid, phosphonic acid, tertiary amine and polyamine, said counterion for the acids is provided by an amine or ammonia, and counterion for amines is provided by ethyl bromide, 2-chloroacteamide, acetic acid or dimethyl sulfate.

4. Oligomer according to claim 3 wherein said reactant is either dimethylpropionic acid or the reaction product of a cyclic anhydride with a multifunctional organic compound selected from the group consisting of polyamine, polyol, amino alcohol, amino acid and hydroxyacid.

5. Oligomer according to claim 1 wherein said substance is selected from the group consisting of amines, alcohols, aminoalcohols, ammonia, carboxylic acid and water.

6. Oligomer according to claim 1 coated on pressure sensitive adhesive products or blended with a film-forming polymer.

7. Oligomer according to claim 1 mixed with ink or paint or used as overprint varnish, mold release, and finish material for fibers, fabrics or paper

8. Oligomers according to claim 1 wherein said polyisocyanate is selected from the group consisting of isomers of toluene diisocyanate, isomers of methylene-bis-phenylisocyanate, polymeric methylene-bis-phenylisocyanate, tetramethyl-m-xylylene diisocyanate, isophorone diisocyanate and m-tetramethylxylylene diisocyanate, or mixtures thereof.

9. Process for manufacturing a pressure sensitive adhesive coated product comprising the steps of:

i. providing a mixture of water soluble urethane oligomers having a weight average molecular weight of 500-10,000 formed by reaction of a composition comprising in admixture optionally dissolved in an organic solvent:

A. polyisocyanate, B. silicone, C. optionally reactant, and wherein either silicone B or reactant C, or both, have at least one ionizable group, D. optionally organic substance with no silicon and no ionizable group, and E. compound providing counterion for said ionizable group, and wherein either

a) silicone B, reactant C and substance D have each two or more isocyanate-reactive groups and the imbalance of the number of the isocyanate groups and the isocyanate-reactive groups in said admixture is more than 6% in favor of the isocyanate groups, or
b) wherein one or more of said silicone B, reactant C and substance D have single isocyanate-reactive groups, and

ii. mixing said oligomer with water to form dilute solution,
iii. coating a flexible substrate with said solution and removing water by heat, and
iv. coating said substrate with a pressure sensitive adhesive.

10. Process according to claim 9 wherein said polyisocyanate is selected from the group consisting of isomers of toluene diisocyanate, isomers of methylene-bis-phenylisocyanate, polymeric methylene-bis-phenylisocyanate, tetramethyl-m-xylylene diisocyanate, isophorone diisocyanate and m-tetramethylxylylene diisocyanate, or mixtures thereof.

11. Process according to claim 9 wherein said oligomer has a weight average molecular weight of 600-6000.

12. Process according to claim 9, wherein the imbalance is greater than 10 %.

**Patentansprüche**

1. Wasserlösliche Urethanoligomere, gebildet durch Reaktion einer Zusammensetzung, die in Mischung enthält:

A. Polyisocyanat und die mit Isocyanat reaktive Gruppen enthaltenden Monomere B. Silicon, C. optionaler Reaktant und D. optional eine organische Substanz ohne Silicium und ohne ionisierbare Gruppe und wobei entweder Silicon B oder Reaktant C oder beide wenigstens eine ionisierbare Gruppe aufweisen, und
E. Verbindung, die ein Gegenion für diese ionisierbare Gruppe bereitstellt, wobei entweder das gewichtsmittlere Molekulargewicht dieses Oligomers 500-10.000 beträgt oder seine Viskosität geringer ist als 20.000 cP bei 20°C, wenn in einer 1/1-Aceton/Wassermischung bei 40% Feststoffen oder mehr oder bei 50% Feststoffen oder mehr aufgelöst, beträgt, worin

- einer oder mehrere dieser Silicon B, Reaktant C und Substanz D eine einzelne isocyanatreaktive Gruppe aufweisen oder
- Silicon B, Reaktant C und Substanz D alle zwei oder mehr isocyanatreaktive Gruppen aufweisen und das Ungleichgewicht der Zahl der Isocyanatgruppen und der isocyanatreaktiven Gruppen dieser Mischung mehr als 6% zugunsten der Isocyanatgruppen beträgt.

2. Oligomere gemäß Anspruch 1, wobei das gewichtsmittlere Molekulargewicht 600 bis weniger als 6000 beträgt.

3. Oligomere gemäß Anspruch 1, wobei diese isocyanatreaktiven Gruppen ausgewählt sind aus der Gruppe bestehend aus Hydroxyl, primärem Amino, sekundärem Amino, Carboxyl und Thiol oder Mischungen davon oder wobei die isocyanatreaktiven Gruppen über eine intermediäre Si-C-Verknüpfung an Ethylenoxy- oder Propylenoxygruppen gebunden sind oder wobei diese ionisierbare Gruppe ausgewählt ist aus der Gruppe bestehend aus Carbonsäure, Sulfonsäure, Phosphonsäure, tertiärem Amin und Polyamin, wobei dieses Gegenion für die Säuren durch ein Amin oder Ammoniak bereitgestellt wird und das Gegenion für die Amine durch Ethylbromid, 2-Chloracetamid, Essigsäure oder Dimethylsulfat bereitgestellt wird.

4. Oligomer gemäß Anspruch 3, wobei dieser Reaktant entweder Dimethylpropionsäure oder das Reaktionsprodukt eines cyclischen Anhydrids mit einer multifunktionellen organischen Verbindung ist, ausgewählt aus der Gruppe bestehend aus Polyamin, Polyol, Aminoalkohol, Aminosäure und Hydroxysäure.

5. Oligomer gemäß Anspruch 1, wobei diese Substanz ausgewählt ist aus der Gruppe bestehend aus Aminen, Alkoholen, Aminoalkoholen, Ammoniak, Carbonsäure und Wasser.

6. Oligomer gemäß Anspruch 1, beschichtet auf einem Haftkleberprodukt oder gemischt mit einem filmbildenden Polymer.

7. Oligomer gemäß Anspruch 1, gemischt mit Tinte oder Farbe oder als Überzugslack, Formtrennmittel, Veredlungsmaterial für Fasern, Gewebe oder Papier verwendet.

8. Oligomere gemäß Anspruch 1, wobei dieses Polyisocyanat ausgewählt ist aus der Gruppe bestehend aus Isomeren von Toluoldiisocyanat, Isomeren von Methylenbisphenylisocyanat, polymerem Methylenbisphenylisocyanat, Tetramethyl-m-xylolylendiisocyanat, Isophorondiisocyanat und m-Tetramethylxylolylendiisocyanat oder Mischungen davon.

9. Verfahren zur Herstellung eines mit einem Haftkleber beschichteten Produkts, umfassend die Schritte:

   i. Bereitstellen einer Mischung eines wasserlöslichen Urethanoligomers mit einem gewichtsmittleren Molekulargewicht von 500-10.000, gebildet durch Reaktion einer Zusammensetzung enthaltend in Mischung optional gelöst in einem organischen Lösungsmittel,

   A. Polyisocyanat, B. Silicon, C. optional Reaktant und worin entweder Silicon B oder Reaktant C oder beide wenigstens eine ionisierbare Gruppe aufweisen, D. optional eine organische Substanz ohne Silicium und ohne ionisierbare Gruppe und E. Verbindung, die ein Gegenion für diese ionisierbare Gruppe bereitstellt, und wobei entweder

   a) Silicon B, Reaktant C und Substanz D alle zwei oder mehr isocyanatreaktive Gruppen aufweisen und das Ungleichgewicht der Zahl der Isocyanatgruppen und der isocyanatreaktiven Gruppen dieser Mischung mehr als 6% zugunsten der Isocyanatgruppen beträgt, oder
   b) worin einer oder mehrere dieser Silicon B, Reaktant C und Substanz D eine einzelne isocyanatreaktive Gruppe aufweisen, und

   ii. Mischen dieses Oligomers mit Wasser, um eine verdünnte Lösung zu bilden,
   iii. Beschichten eines flexiblen Substrats mit dieser Lösung und Entfernen des Wassers durch Wärme und
   iv. Beschichten dieses Substrats mit einem Haftklebstoff.

10. Verfahren gemäß Anspruch 9, wobei dieses Polyisocyanat ausgewählt ist aus der Gruppe bestehend aus Isomeren von Toluoldiisocyanat, Isomeren von Methylenbisphenylisocyanat, polymerem Methylenbisphenylisocyanat, Tetramethyl-m-xylolylendiisocyanat, Isophorondiisocyanat und m-Tetramethylxylolylendiisocyanat oder Mischungen davon.

11. Verfahren gemäß Anspruch 9, wobei dieses Oligomer ein gewichtsmittleres Molekulargewicht von 600-6000 aufweist.

12. Verfahren gemäß Anspruch 9, wobei dieses Ungleichgewicht größer als 10 % ist.


**Revendications**

1. Des oligomères uréthane solubles dans l'eau formés par la réaction d'une composition comprenant en mélange:

   A. un polyisocyanate, et des monomères ayant des groupes isocyanate-réactif, B. un silicone, C. optionnellement un réactant, et D. optionnellement une substance organique sans silicium et sans groupe ionisable, et dans laquelle le silicone B ou le réactif C ou les deux, ont au moins un groupe ionisable, et E. une composition fournissant un contre-ion pour ledit groupe ionisable, dans laquelle ou bien le poids moyen de masse moléculaire dudit oligomère est 500-10000 ou sa viscosité est moins de 20,000cps à 20°C une fois dissous dans un mélange 1/1 acétone/eau à une concentration de 40% ou plus, dans laquelle

- un ou plusieurs desdits silicone B, réactant C et substance D ont un seul groupe isocyanate-réactif, ou
- le silicone B, le réactant C et la substance D ont deux ou plusieurs groupes isocyanate-réactif et le déséquilibre du nombre de groupes isocyanate et des groupes isocyanate-réactif dans ladite composition est supérieur à 6% en faveur des groupes isocyanate.

2. Des oligomères selon la revendication 1 dans laquelle le poids moyen de masse moléculaire est de 600 à moins de 6000.

3. Des oligomères selon la revendication 1 dans laquelle lesdits groupes isocyanate-réactifs sont choisis parmi le groupe consistant en hydroxyle, amines primaires, amine secondaires, carboxyle and thiol, ou de ses mélanges, ou des groupes isocyanate-réactifs sont liés par la liaison l'intermédiaire Si-C aux groupes oxyethylene ou oxypropylene, ou dans laquelle ledit groupe ionisable est sélectionné parmi le groupe consistant en acide carboxylique, acide sulfonique, acide phosphorique, amine tertiaire et polyamine, dit contre-ion pour les acides est fourni par une amine ou de l'ammoniaque, et le contre-ion pour les amines est fourni par le bromure d'éthyle, 2-chloroacétamide, acide acétique ou le sulfate de diméthyle.

4. Des oligomères selon la revendication 3 dans laquelle ledit réactant est soit l'acide dimethylolpropionic soit le produit de la réaction d'un anhydride cyclique avec un composé organique multifonctionnel choisi parmi le groupe consistant en polyamine, polyol, aminoalcool, aminoacide et hydroxyacide.

5. Des oligomères selon la revendication 1 dans laquelle ladite substance est choisie parmi le groupe consistant en amines, alcools, aminoalcool, ammoniaque, acides carboxyliques et eau.

6. Des oligomères, selon la revendication 1, enduits sur des produits ayant un adhésive sensible à la pression ou mélangés avec un polymère filmogène.

7. Des oligomères selon la revendication 1 mélangés avec encre ou peinture, ou utilisés comme vernis de surimpression, démoulage et matériel de finition pour fibres, tissus ou produits en papier.

8. Des oligomères selon la revendication 1 dans laquelle dit polyisocyanate est choisi dans le groupe consistant en isomères d'isocyanate de toluène, isomères méthylène-bis-phenylisocyanate, méthylène-bis-phenylisocyanate polymérique, tétraméthyl-m-xylène diisocyanate, diisocyanate de isophorone, et tétraméthylxylène diisocyanate, ou leurs mélanges.

9. Un processus de fabrication d'un produit enduit d'adhésif sensible à la pression comprenant les étapes suivantes:

i. Fournir un mélange d'oligomères uréthane soluble dans l'eau ayant un poids moléculaire moyen de 500-10000 formé par la réaction d'une composition comprenant en mélange optionnellement dissous dans un solvant organique: A. un polyisocyanate, B. un silicone, C. optionnellement un réactant, et dans laquelle soit le silicone B soit le réactif C, ou les deux, ont au moins un groupe ionisable, D. optionnellement une substance organique sans silicium et sans groupe ionisable, et E. une composition fournissant un contre-ion pour ledit groupe ionisable, et dans laquelle soit

a) le silicone B, le réactant C et la substance D ont chacun deux ou plusieurs groupes isocyanate-réactif et le déséquilibre du nombre des groupes isocyanate et des groupes isocyanate-réactifs dans ladite composition est supérieur à 6% en faveur des groupes isocyanate, ou
b) dans laquelle un ou plus dudit silicone B, réactant C et substance D ont chacun un seul groupe isocyanate-réactif, et

ii. Mélanger ledit oligomère avec de l'eau pour former une solution diluée,
iii. Enduire un substrat flexible avec ladite solution et evaporer l'eau à température élevée, et
iv. Enduire ledit substrat avec un adhésive sensible à la pression.

**10.** Processus selon la revendication 9 dans laquelle ledit polyisocyanate est choisi dans groupe consistant en isomères d'isocyanate de toluène, isomères méthylène-bis-phenylisocyanate, méthylène-bis-phenylisocyanate polymérique, tétraméthyl-m-xylène diisocyanate, diisocyanate de isophorone, et tétraméthylxylène diisocyanate. ou leurs mélanges.

**11.** Processus selon la revendication 9 dans laquelle dit oligomère a un poids moyen de masse moléculaire de 600 à 6000.

**12.** Processus selon la revendication 9 dans laquelle le déséquilibre est supérieur à 10%.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP A0380236 A2
- US 4287109 A, Schlak
- DE 3730780 A1
- US P5082704 A
- US 5356706 A
- US 5543171 A
- US P5679754 A
- US P5750630 A
- US 6072019 A
- US P6072019 A

**Non-patent literature cited in the description**

- The Encyclopedia of Polymer Science and Engineering. Wiley Interscience, vol. 10, 432
- Textbook of Polymer Science. 17
- Principles of Polymerization. 110-111